# EUROPEAN PATENT APPLICATION

(11) **EP 4 751 981 A1**
(43) Date of publication of application: **03.06.2026**
(21) Application number: 24858345.2
(22) Date of filing: 16.08.2024
(51) Int. Cl.: B60L 15/20, B60W 30/06

(54) **LONGITUDINAL CONTROL METHOD AND APPARATUS, AND VEHICLE**

(30) Priority: 30.08.2023 CN 202311110205
(71) Applicant: Yinwang Intelligent Technologies Co., Ltd., Shenzhen, Guangdong 518129 (CN)
(72) Inventor: XIN, Fulong, Shenzhen, Guangdong 518129 (CN); WANG, Xinyu, Shenzhen, Guangdong 518129 (CN); CHEN, Yongshang, Shenzhen, Guangdong 518129 (CN); CHEN, Zhiqiang, Shenzhen, Guangdong 518129 (CN); XIA, Qing, Shenzhen, Guangdong 518129 (CN); SHAO, Hailong, Shenzhen, Guangdong 518129 (CN)
(74) Representative: Gill Jennings & Every LLP
(86) International application number: PCT/CN2024/112802
(87) International publication number: WO 2025/044802

(57) **Abstract**

This application provides a longitudinal control method and apparatus, and a vehicle. The method may be applied to the field of intelligent driving. The method includes: An autonomous driving controller sends an instruction to a motor controller, where the instruction is used to determine a motor rotation speed; the motor controller determines a torque based on the instruction; and the motor controller controls a drive motor based on the torque. Embodiments of this application may be applied to an intelligent vehicle or a new energy vehicle, to help improve control precision of the vehicle, so as to help improve user experience.

## Description

This application claims priority to Chinese Patent Application No. 202311110205.0, filed with the China National Intellectual Property Administration on August 30, 2023 and entitled "LONGITUDINAL CONTROL METHOD AND APPARATUS, AND VEHICLE", which is incorporated herein by reference in its entirety.

### TECHNICAL FIELD

This application relates to the field of intelligent driving, and more specifically, to a longitudinal control method and apparatus, and a vehicle.

### BACKGROUND

With intelligent development of vehicles, an autonomous driving technology is gradually being applied in reality. Automatic parking (auto parking, AP) is used as an example. The AP refers to automatic parking of a vehicle. To be specific, an autonomous driving system of the vehicle can semi-automatically or fully automatically assist a user in parking the vehicle in a parking space. The automatic parking may include automatic parking assist (auto parking assist, APA), remote parking assist (remote parking assist, RPA), automatic valet parking (auto valet parking, AVP), and the like. After planning a parking trajectory, the autonomous driving system of the vehicle may control and track the parking trajectory. Control precision of the vehicle directly affects parking experience of the user (for example, a parking time, a number of gear changes, and a stuck time).

Therefore, how to improve the control precision of the vehicle becomes an urgent problem to be resolved.

### SUMMARY

This application provides a longitudinal control method and apparatus, and a vehicle, to help improve control precision of a vehicle, so as to help improve user experience.

According to a first aspect, a longitudinal control system is provided. The longitudinal control system includes an autonomous driving controller and a motor controller, where the autonomous driving controller is configured to send a first instruction to the motor controller, where the first instruction is used to determine a first motor rotation speed; the motor controller is configured to determine a first torque based on the first instruction; and the motor controller is further configured to control a drive motor based on the first torque.

Based on the foregoing technical solution, the motor controller may determine information about the torque based on the instruction that is sent by the autonomous driving controller and that is used to determine the first motor rotation speed. In this way, a closed-loop execution link may be formed by using the motor controller and the drive motor. The closed-loop execution link is shorter, and this helps improve a control frequency of a vehicle speed and longitudinal control precision, to help improve user experience.

In addition, during vehicle braking, electric braking may be implemented by utilizing the drive motor, without a need to depend on hydraulic braking or another braking manner. In this way, the coupling with a chassis tier 1 (Tier 1) automotive supplier may be reduced, the dependency of the autonomous driving controller on a chassis tier 1 is reduced, and the closed-loop resolution efficiency of a longitudinal problem of the vehicle is improved.

In some possible implementations, the motor controller is further configured to obtain a second motor rotation speed of the drive motor, and perform a corresponding operation based on the first motor rotation speed and the second motor rotation speed.

The first motor rotation speed may be an expected motor rotation speed of the drive motor, and the second motor rotation speed may be an actual motor rotation speed of the drive motor.

In some possible implementations, the first instruction is a driving instruction or a braking instruction.

A process in which the autonomous driving controller sends, when controlling vehicle driving or braking, the instruction used to determine the motor rotation speed to the motor controller may also be understood as a process in which the vehicle performs driving or braking in a speed mode.

In some possible implementations, the autonomous driving controller is further configured to: obtain current location information of the vehicle and target location information; determine the first motor rotation speed based on the current location information of the vehicle and the target location information; and send the first instruction to the motor controller, where the first instruction includes the first motor rotation speed.

In some possible implementations, the motor controller may be a motor microcontroller unit (microcontroller unit, MCU).

With reference to the first aspect, in some implementations of the first aspect, the motor controller is further configured to: obtain a second motor rotation speed of the drive motor; and when a difference between the first motor rotation speed and the second motor rotation speed is greater than or equal to a preset rotation speed difference, send a second instruction to the autonomous driving controller, where the second instruction indicates that the rotation speed of the drive motor is abnormal; and the autonomous driving controller is further configured to: send a third instruction to a brake controller based on the second instruction, where the third instruction instructs the brake controller to perform braking control.

Based on the foregoing technical solution, when detecting that a difference between the expected motor rotation speed and the actual motor rotation speed of the drive motor is excessively large, the motor controller may send, to the autonomous driving controller, the instruction indicating that the motor is abnormal, so that the autonomous driving controller may send the braking instruction to the brake controller. In this way, when the drive motor is abnormal, the brake controller may be used to brake the vehicle, to ensure that the vehicle can decelerate or stop in time when the drive motor is abnormal. This helps improve driving safety of a user.

A process in which the autonomous driving controller sends the braking instruction to the brake controller may be understood as a process in which the vehicle performs braking in a torque mode. After the brake controller controls a speed of the vehicle to be less than a specific speed or controls the vehicle to stop, the vehicle may switch from the torque mode to the speed mode again.

In some possible implementations, the autonomous driving controller is configured to: send the third instruction to a hydraulic brake controller based on the second instruction, where the third instruction instructs the hydraulic brake controller to perform hydraulic braking control.

For example, the hydraulic brake controller may be an electronic stability controller (electronic stability controller, ESC).

With reference to the first aspect, in some implementations of the first aspect, the first motor rotation speed corresponds to a first vehicle speed, and the autonomous driving domain controller is further configured to: obtain a second vehicle speed of a vehicle; and when a difference between the first vehicle speed and the second vehicle speed is greater than or equal to a preset vehicle speed difference, send a fourth instruction to a brake controller, where the fourth instruction instructs the brake controller to perform braking control.

Based on the foregoing technical solution, when detecting that a difference between the expected vehicle speed and the actual vehicle speed is excessively large, the autonomous driving controller may send the braking instruction to the brake controller. In this way, when the vehicle speed is abnormal, the brake controller may be used to brake the vehicle, to ensure that the vehicle can decelerate or stop in time when the vehicle speed is abnormal. This helps improve driving safety of a user.

The first vehicle speed may be the expected vehicle speed of the vehicle, and the second vehicle speed may be the actual vehicle speed of the vehicle. For example, the autonomous driving controller may obtain data collected by a vehicle speed sensor, and determine the actual vehicle speed of the vehicle based on the data.

With reference to the first aspect, in some implementations of the first aspect, the autonomous driving controller is connected to the motor controller.

Based on the foregoing technical solution, the autonomous driving controller and the motor controller may be directly connected, and an instruction of the autonomous driving controller does not need to be sent to the motor controller via a vehicle domain controller (vehicle domain controller, VDC). In this way, an end-to-end latency during longitudinal control can be further reduced, and higher-level function evolution is also supported, for example, closed-loop motor phase control and wheel-end cruise speed control.

With reference to the first aspect, in some implementations of the first aspect, the longitudinal control system further includes a vehicle domain controller; the autonomous driving controller is configured to send the first instruction to the vehicle domain controller; and the vehicle domain controller is configured to send the first instruction to the motor controller.

With reference to the first aspect, in some implementations of the first aspect, the autonomous driving controller is further configured to: before sending the first instruction to the motor controller, determine that the vehicle is in an automatic parking state, or determine that a speed of the vehicle is less than or equal to a preset speed.

Based on the foregoing technical solution, when the vehicle is in the automatic parking state, the vehicle may be controlled in the speed mode. Longitudinal control precision is improved, to improve a sticking and overshoot of the vehicle, so as to help improve parking experience of a user. For example, a stuck time is reduced by 50%, a success rate of auxiliary parking in a narrow parking space is improved, a number of gear changes is reduced by 30%, and parking duration is reduced by 10%.

In some possible implementations, the preset speed is 10 kilometers per hour.

With reference to the first aspect, in some implementations of the first aspect, the first instruction includes a first distance or a first phase, the first distance is a distance between the vehicle and a target location, the first phase is a quantity of revolutions that is of the drive motor and that corresponds to the first distance, and the motor controller is configured to: determine the first motor rotation speed based on the first distance or the first phase; and determine the first torque based on the first motor rotation speed.

Based on the foregoing technical solution, after obtaining the distance or the phase between the vehicle and the target location, the autonomous driving controller may include the distance or the phase in an instruction and send the instruction to the motor controller, so that the motor controller determines the motor rotation speed. In this way, the autonomous driving controller does not need to calculate the motor rotation speed. This helps reduce calculation overheads of the autonomous driving controller.

According to a second aspect, a longitudinal control method is provided. The method is applied to a motor controller, and the method includes: obtaining a first instruction from an autonomous driving controller, where the first instruction is used to determine a first motor rotation speed; determining a first torque based on the first instruction; and controlling a drive motor based on the first torque.

With reference to the second aspect, in some implementations of the second aspect, the method further includes: obtaining a second motor rotation speed of the drive motor; and when a difference between the first motor rotation speed and the second motor rotation speed is greater than or equal to a preset rotation speed difference, sending a second instruction to the autonomous driving controller, where the second instruction indicates that the rotation speed of the drive motor is abnormal.

With reference to the second aspect, in some implementations of the second aspect, obtaining the first instruction from the autonomous driving controller includes: obtaining the first instruction sent by the autonomous driving controller; or obtaining the first instruction sent by the autonomous driving controller via a vehicle domain controller.

With reference to the second aspect, in some implementations of the second aspect, the first instruction includes a first distance or a first phase, the first distance is a distance between a vehicle and a target location, and the first phase is a quantity of revolutions that is of the drive motor and that corresponds to the first distance; and determining the first torque based on the first instruction includes: determining the first motor rotation speed based on the first distance or the first phase; and determining the first torque based on the first motor rotation speed.

With reference to the second aspect, in some implementations of the second aspect, the first instruction includes the first motor rotation speed.

According to a third aspect, a longitudinal control method is provided. The method is applied to an autonomous driving controller, and the method includes: generating a first instruction, where the first instruction is used to determine a first motor rotation speed; and sending the first instruction to a motor controller.

With reference to the third aspect, in some implementations of the third aspect, the method further includes: receiving a second instruction sent by the motor controller, where the second instruction indicates that a rotation speed of a drive motor is abnormal; and sending a third instruction to a brake controller based on the second instruction, where the third instruction instructs the brake controller to perform braking control.

With reference to the third aspect, in some implementations of the third aspect, the first motor rotation speed corresponds to a first vehicle speed, and the method further includes: obtaining a second vehicle speed of a vehicle; and when a difference between the first vehicle speed and the second vehicle speed is greater than or equal to a preset vehicle speed difference, sending a fourth instruction to a brake controller, where the fourth instruction instructs the brake controller to perform braking control.

With reference to the third aspect, in some implementations of the third aspect, sending the first instruction to the motor controller includes: sending the first instruction to the motor controller via a vehicle domain controller.

With reference to the third aspect, in some implementations of the third aspect, the method further includes: before sending the first instruction to the motor controller, determining that the vehicle is in an automatic parking state, or determining that a speed of the vehicle is less than or equal to a preset speed.

With reference to the third aspect, in some implementations of the third aspect, the first instruction includes a first distance or a first phase, the first distance is a distance between the vehicle and a target location, and the first phase is a quantity of revolutions that is of the drive motor and that corresponds to the first distance.

According to a fourth aspect, a longitudinal control apparatus is provided. The longitudinal control apparatus includes: an obtaining unit, configured to obtain a first instruction from an autonomous driving controller, where the first instruction is used to determine a first motor rotation speed; a determining unit, configured to determine a first torque based on the first instruction; and a control unit, configured to control a drive motor based on the first torque.

With reference to the fourth aspect, in some implementations of the fourth aspect, the apparatus further includes a sending unit. The obtaining unit is further configured to obtain a second motor rotation speed of the drive motor. The sending unit is further configured to: when a difference between the first motor rotation speed and the second motor rotation speed is greater than or equal to a preset rotation speed difference, send a second instruction to the autonomous driving controller, where the second instruction indicates that the rotation speed of the drive motor is abnormal.

With reference to the fourth aspect, in some implementations of the fourth aspect, the obtaining unit is configured to: obtain the first instruction sent by the autonomous driving controller; or obtain the first instruction sent by the autonomous driving controller via a vehicle domain controller.

With reference to the fourth aspect, in some implementations of the fourth aspect, the first instruction includes a first distance or a first phase, the first distance is a distance between a vehicle and a target location, the first phase is a quantity of revolutions that is of the drive motor and that corresponds to the first distance, and the control unit is configured to: determine the first motor rotation speed based on the first distance or the first phase; and determine the first torque based on the first motor rotation speed.

With reference to the fourth aspect, in some implementations of the fourth aspect, the first instruction includes the first motor rotation speed.

According to a fifth aspect, a longitudinal control apparatus is provided. The apparatus includes: an instruction generation unit, configured to generate a first instruction, where the first instruction is used to determine a first motor rotation speed; and a transceiver unit, configured to send the first instruction to a motor controller.

With reference to the fifth aspect, in some implementations of the fifth aspect, the transceiver unit is further configured to: receive a second instruction sent by the motor controller, where the second instruction indicates that a rotation speed of a drive motor is abnormal; and send a third instruction to a brake controller based on the second instruction, where the third instruction instructs the brake controller to perform braking control.

With reference to the fifth aspect, in some implementations of the fifth aspect, the first motor rotation speed corresponds to a first vehicle speed. The apparatus further includes: an obtaining unit, configured to obtain a second vehicle speed of a vehicle. The transceiver unit is further configured to: when a difference between the first vehicle speed and the second vehicle speed is greater than or equal to a preset vehicle speed difference, send a fourth instruction to a brake controller, where the fourth instruction instructs the brake controller to perform braking control.

With reference to the fifth aspect, in some implementations of the fifth aspect, the transceiver unit is configured to: send the first instruction to the motor controller via a vehicle domain controller.

With reference to the fifth aspect, in some implementations of the fifth aspect, the apparatus further includes: a determining unit, configured to: before the transceiver unit sends the first instruction to the motor controller, determine that the vehicle is in an automatic parking state, or determine that a speed of the vehicle is less than or equal to a preset speed.

With reference to the fifth aspect, in some implementations of the fifth aspect, the first instruction includes a first distance or a first phase, the first distance is a distance between the vehicle and a target location, and the first phase is a quantity of revolutions that is of the drive motor and that corresponds to the first distance.

According to a sixth aspect, a longitudinal control apparatus is provided. The apparatus includes a processing unit and a storage unit. The storage unit is configured to store instructions, and the processing unit executes the instructions stored in the storage unit, so that the apparatus performs any possible longitudinal control method according to the second aspect.

According to a seventh aspect, a longitudinal control apparatus is provided. The apparatus includes a processing unit and a storage unit. The storage unit is configured to store instructions, and the processing unit executes the instructions stored in the storage unit, so that the apparatus performs any possible longitudinal control method according to the third aspect.

According to an eighth aspect, this application provides a longitudinal control system. The longitudinal control system includes the longitudinal control apparatus according to the fourth aspect and the longitudinal control apparatus according to the fifth aspect, or includes the longitudinal control apparatus according to the sixth aspect and the longitudinal control apparatus according to the seventh aspect.

According to a ninth aspect, this application provides a vehicle. The vehicle includes any possible longitudinal control system according to the first aspect or the eighth aspect, or includes any possible longitudinal control apparatus according to the fourth aspect to the seventh aspect.

According to a tenth aspect, this application provides a computer program product. The computer program product includes computer program code. When the computer program code is run on a computer, the computer is enabled to perform any possible longitudinal control method according to the second aspect.

According to an eleventh aspect, this application provides a computer program product. The computer program product includes computer program code. When the computer program code is run on a computer, the computer is enabled to perform any possible longitudinal control method according to the third aspect.

It should be noted that all or some of the computer program code may be stored in a first storage medium. The first storage medium may be packaged together with a processor, or may be packaged separately from a processor. This is not specifically limited in embodiments of this application.

According to a twelfth aspect, this application provides a computer-readable medium. The computer-readable medium stores program code. When the computer program code is run on a computer, the computer is enabled to perform any possible longitudinal control method according to the second aspect.

According to a thirteenth aspect, this application provides a computer-readable medium. The computer-readable medium stores program code. When the computer program code is run on a computer, the computer is enabled to perform any possible longitudinal control method according to the third aspect.

According to a fourteenth aspect, this application provides a chip. The chip includes a circuit, and the circuit is configured to perform any possible longitudinal control method according to the second aspect.

According to a fifteenth aspect, this application provides a chip. The chip includes a circuit, and the circuit is configured to perform any possible longitudinal control method according to the third aspect.

### BRIEF DESCRIPTION OF DRAWINGS

FIG. 1 is a functional block diagram of a vehicle according to an embodiment of this application;
FIG. 2 is a schematic flowchart of a longitudinal control method according to an embodiment of this application;
FIG. 3 is a diagram of a planned parking trajectory according to an embodiment of this application;
FIG. 4 is a block diagram of a longitudinal control system according to an embodiment of this application;
FIG. 5 is another block diagram of a longitudinal control system according to an embodiment of this application;
FIG. 6 is another schematic flowchart of a longitudinal control method according to an embodiment of this application;
FIG. 7 is another block diagram of a longitudinal control system according to an embodiment of this application;
FIG. 8 is another schematic flowchart of a longitudinal control method according to an embodiment of this application;
FIG. 9 is another schematic flowchart of a longitudinal control method according to an embodiment of this application;
FIG. 10 is a block diagram of a longitudinal control apparatus according to an embodiment of this application; and
FIG. 11 is another block diagram of a longitudinal control apparatus according to an embodiment of this application.

### DESCRIPTION OF EMBODIMENTS

The following describes the technical solutions in embodiments of this application with reference to the accompanying drawings in embodiments of this application. In description in embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. "At least one" means one or more. For example, "at least one of A and B ", similar to "A and/or B", describes an association relationship between associated objects and indicates that three relationships may exist. For example, at least one of A and B may indicate the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation. In addition, in the descriptions of embodiments, unless otherwise specified, "a plurality of" means two or more.

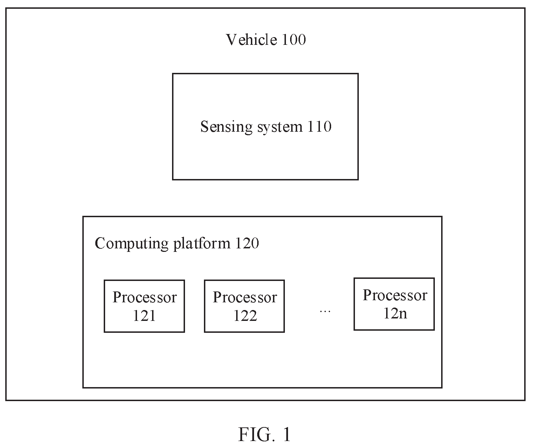

FIG. 1 is a functional block diagram of a vehicle 100 according to an embodiment of this application. The vehicle 100 may include a sensing system 110 and a computing platform 120. The sensing system 110 may include one or more sensors that sense information about an ambient environment of the vehicle 100. For example, the sensing system 110 may include one or more crash sensors. For example, the sensing system 110 may include a positioning system. The positioning system may be a global positioning system (global positioning system, GPS), a BeiDou system, or another positioning system. For another example, the sensing system 110 may include one or more of an inertial measurement unit (inertial measurement unit, IMU), a lidar, a millimeter-wave radar, an ultrasonic radar, and an image shooting apparatus.

Some or all functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and some or all of the processors 121 to 12n may invoke the instructions in the memory, to implement a corresponding function.

The computing platform 120 may include an autonomous driving controller and a motor controller. The autonomous driving controller may obtain data by utilizing a plurality of sensors (including but not limited to a lidar, a millimeter-wave radar, an image shooting apparatus, an ultrasonic sensor, a global positioning system, and an inertial measurement unit) on the vehicle, and analyze and process the obtained data, to implement functions such as obstacle sensing, target recognition, vehicle positioning, path planning, and driver monitoring/reminding, so as to improve driving safety, automation, and comfort of the vehicle. For example, when the autonomous driving controller performs longitudinal control on the vehicle, the autonomous driving controller may send, to the motor controller, an instruction (which may be a driving instruction or a braking instruction) used to determine a motor rotation speed. The motor controller may control, based on the instruction, a drive motor to output a torque, and transmit the torque to a drive wheel via a mechanical transmission system, to implement longitudinal control on the vehicle.

At different autonomous driving levels (L0 to L5), the autonomous driving controller may implement different levels of autonomous driving assistance based on information obtained by utilizing an artificial intelligence algorithm and a plurality of sensors. The foregoing autonomous driving levels (L0 to L5) are based on a grading standard of the society of automotive engineers (society of automotive engineers, SAE). The level L0 indicates no automation, a level L1 indicates driving assistance, a level L2 indicates partial automation, a level L3 indicates conditional automation, a level L4 indicates high automation, and the level L5 indicates full automation. Tasks of monitoring and responding to road conditions at the L1 to L3 levels are jointly completed by a driver and a system, and the driver needs to take over a dynamic driving task. The L4 and L5 levels may enable the driver to be completely transformed into a passenger.

Functions that can be implemented by the autonomous driving controller mainly include but are not limited to adaptive cruise, automatic emergency braking, automatic parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode. For example, automatic parking may include APA, RPA, AVP, and the like. For APA, the driver does not need to control a steering wheel, but still needs to control a throttle and a brake in the vehicle. For RPA, the driver may remotely park the vehicle outside the vehicle by using a terminal (for example, a mobile phone). For AVP, the vehicle may complete parking without the driver. In terms of the corresponding autonomous driving levels, the APA is approximately at the level L1, the RPA is approximately between the levels L2 to L3, and the AVP is approximately at the level L4.

The vehicle in embodiments of this application is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in embodiments of this application.

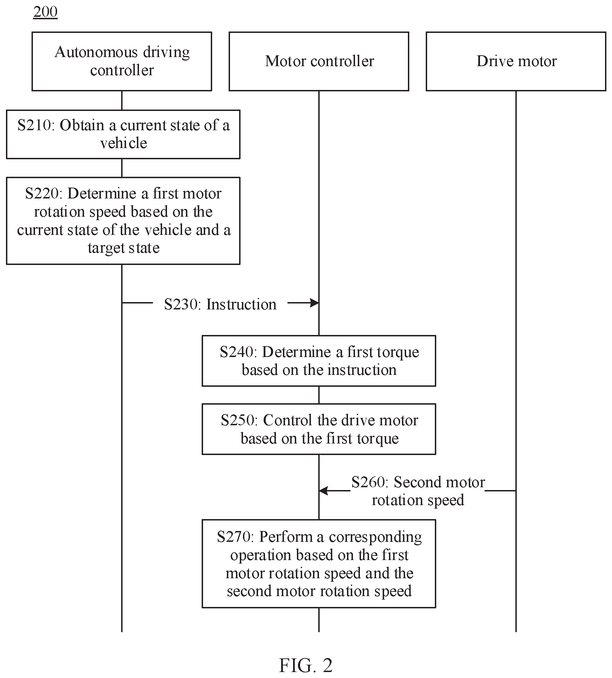

FIG. 2 is a schematic flowchart of a longitudinal control method 200 according to an embodiment of this application. The method 200 may be performed by a system including an autonomous driving controller and a motor controller. The method 200 includes the following steps.

S210: The autonomous driving controller obtains a current state of a vehicle.

For example, the current state of the vehicle includes but is not limited to one or more of current location information, a current speed, a current acceleration, and a current heading angle of the vehicle.

S220: The autonomous driving controller determines a first motor rotation speed based on the current state of the vehicle and a target state.

For example, the target state may include one or more of expected location information, an expected speed, an expected acceleration, and an expected heading angle of the vehicle at a next moment.

The method 200 may be a control process of the vehicle in a speed mode. The first motor rotation speed may be a motor rotation speed used for vehicle driving, or may be a motor rotation speed used for vehicle braking.

For example, the vehicle is in an automatic parking state. The autonomous driving controller may determine the first motor rotation speed based on a distance between a current location of the vehicle and a target parking location, a transmission ratio of a mechanical transmission system, and a radius of a wheel.

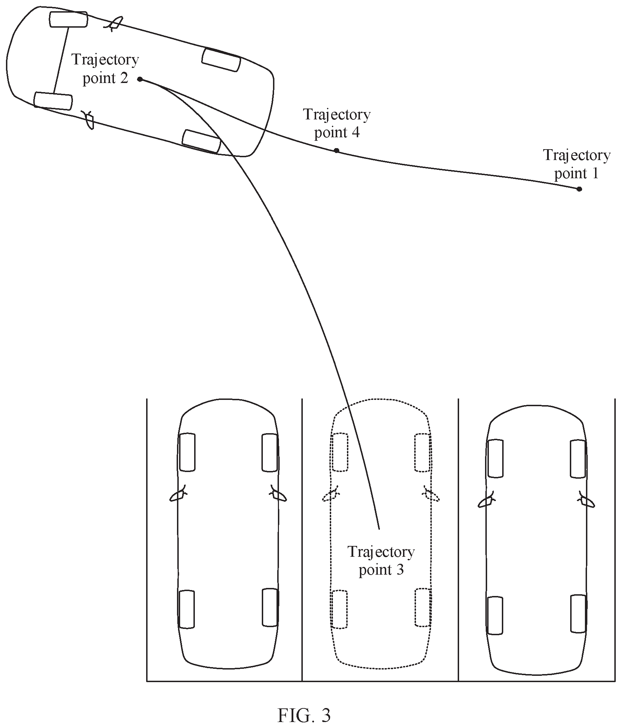

For example, FIG. 3 is a diagram of a planned parking trajectory according to an embodiment of this application.

The autonomous driving controller may plan a planned trajectory from the current location of the vehicle to a target parking space based on the current location of the vehicle and the target parking space. The planned trajectory may include one or more trajectory points. For example, the planned trajectory includes a trajectory point 1 (the current location of the vehicle), a trajectory point 2, and a trajectory point 3 (the target parking space). The vehicle is in a forward gear (D gear) between the trajectory point 1 and the trajectory point 2, and the vehicle is in a reverse gear (R gear) between the trajectory point 2 and the trajectory point 3. In a process in which the vehicle travels from the trajectory point 1 to the trajectory point 2, the vehicle may first accelerate from the trajectory point 1 to a trajectory point 4, and then decelerate from the trajectory point 4 to the trajectory point 2. In a process in which the vehicle accelerates from the trajectory point 1 to the trajectory point 4, the vehicle may determine, based on a location, a speed, an acceleration, and a heading angle of the vehicle at the trajectory point 1, a location, a speed, an acceleration, and a heading angle of the vehicle at the trajectory point 4, the transmission ratio of the mechanical transmission system, and the radius of the wheel, that an expected motor rotation speed of the vehicle at a moment t₁ is n₁, where the moment t₁ is a moment between traveling from the trajectory 1 to the trajectory 4 by the vehicle.

S230: The autonomous driving controller sends an instruction to the motor controller, where the instruction includes the first motor rotation speed.

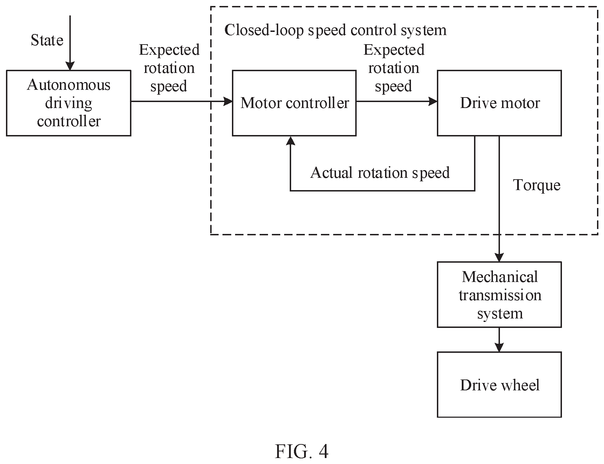

For example, FIG. 4 is a block diagram of a longitudinal control system according to an embodiment of this application. As shown in FIG. 4, the longitudinal control system includes the autonomous driving controller, the motor controller, and a drive motor. The motor controller and the drive motor form a closed-loop speed control system. The drive motor may be connected to a drive wheel via the mechanical transmission system.

Optionally, that the autonomous driving controller sends the first motor rotation speed to the motor controller includes: The autonomous driving controller sends the first motor rotation speed to the motor controller via a vehicle domain controller.

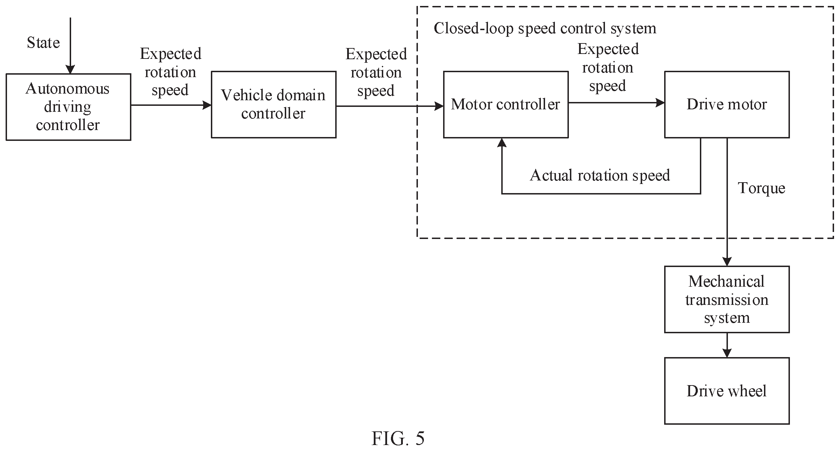

For example, FIG. 5 is another block diagram of a longitudinal control system according to an embodiment of this application. As shown in FIG. 5, the longitudinal control system includes the autonomous driving controller, a vehicle controller, the motor controller, and a drive motor. When receiving the instruction sent by the autonomous driving controller, the vehicle domain controller may send the instruction to the motor controller.

Optionally, after receiving the instruction, the vehicle domain controller may further arbitrate the motor rotation speed included in the instruction. For example, when determining that the motor rotation speed included in the instruction is less than a maximum rotation speed of the drive motor, the vehicle domain controller may forward the instruction to the motor controller.

For example, the instruction includes the expected motor rotation speed n₁ at the moment t₁.

S240: The motor controller determines a first torque based on the instruction.

For example, the motor controller may determine a torque T₁ based on the expected motor rotation speed n₁.

In the foregoing S210 to S230, an example in which the autonomous driving controller sends the first motor rotation speed to the motor controller is used for description. Embodiments of this application are not limited thereto. For example, the autonomous driving controller may send information about the distance between the current location of the vehicle and the target parking space to the motor controller. The motor controller determines the first motor rotation speed based on the information about the distance. Alternatively, the autonomous driving controller may send, to the motor controller, information about a phase corresponding to the distance. The motor controller determines the first motor rotation speed based on the information about the phase.

S250: The motor controller controls the drive motor based on the first torque.

For example, the motor controller may control the drive motor to output the torque T₁ to the mechanical transmission system, and then the torque T₁ is transmitted to the drive wheel via the mechanical transmission system, to drive the vehicle to travel.

S260: The motor controller obtains a second motor rotation speed of the drive motor.

For example, the second motor rotation speed may be an actual rotation speed n₂ of the motor at the moment t₁.

In this embodiment of this application, the motor controller and the drive motor may form the closed-loop speed control system. The motor controller may determine the torque T₁ based on the expected motor rotation speed n₁ received from the autonomous driving controller, and determine, based on the obtained actual motor rotation speed n₂ of the drive motor, whether longitudinal control on the vehicle in the parking process is normal.

S270: The motor controller performs a corresponding operation based on the first motor rotation speed and the second motor rotation speed.

Optionally, that the motor controller performs a corresponding operation based on the expected rotation speed n₁ and the actual rotation speed n₂ includes: When a difference between the expected rotation speed n₁ and the actual rotation speed n₂ is less than or equal to a preset rotation speed difference, the motor controller continues to perform S240 to S270 based on an expected rotation speed at a next moment.

For example, at the moment t₁, when determining that the difference between the expected rotation speed n₁ and the actual rotation speed n₂ of the motor is less than or equal to the preset rotation speed difference, the motor controller may determine that longitudinal control on the vehicle in the parking process is normal. Therefore, the motor controller may send an instruction 1 to the autonomous driving controller, where the instruction 1 is used to request the autonomous driving controller to send an expected motor rotation speed n₃ at a moment t₂, where the moment t₂ may be a moment after the moment t₁. When receiving the instruction 1 sent by the motor controller, the autonomous driving controller may send the expected motor rotation speed n₃ at the moment t₂ to the motor controller. The motor controller may perform the foregoing steps S240 to S270.

For example, the preset rotation speed difference is 20 revolutions per second.

Optionally, that the motor controller performs a corresponding operation based on the expected rotation speed n₁ and the actual rotation speed n₂ includes: When a difference between the expected rotation speed n₁ and the actual rotation speed n₂ is greater than a preset rotation speed difference, the motor controller sends an instruction to the autonomous driving controller, where the instruction indicates that a rotation speed of the motor is abnormal.

For example, at the moment t₁, when determining that the difference between the expected rotation speed n₁ and the actual rotation speed n₂ is greater than the preset rotation speed difference, the motor controller may determine that longitudinal control on the vehicle is abnormal in the parking process. Therefore, the motor controller may send an instruction 2 to the autonomous driving controller, where the instruction 2 may indicate that the rotation speed of the motor is abnormal. When receiving the instruction 2, the autonomous driving controller may send an instruction 3 to a hydraulic brake controller, where the instruction 3 may instruct the hydraulic brake controller to perform hydraulic braking control. When receiving the instruction 3, the hydraulic brake controller may establish master cylinder and wheel-end pressures, to implement deceleration or stop of the vehicle.

When the autonomous driving controller sends the instruction to the hydraulic brake controller, the vehicle may be switched from the speed mode to a torque mode. In the torque mode, the autonomous driving controller sends a braking instruction to the brake controller, to control the vehicle to decelerate or stop.

After a speed of the vehicle is reduced to be lower than a preset speed or the vehicle stops, the vehicle may be switched from the torque mode to the speed mode again. The autonomous driving controller may continue to send a motor rotation speed to the motor controller based on a current state of the vehicle and a target state, to continue to control the vehicle to park in the target parking space.

For example, at the moment t₁, when determining that the expected rotation speed n₁ is greater than the actual rotation speed n₂ and the difference between the expected rotation speed n₁ and the actual rotation speed n₂ is greater than the preset rotation speed difference, the motor controller may determine that the vehicle is in a stuck state in the parking process. Therefore, the motor controller may send an instruction 4 to the autonomous driving controller, where the instruction 4 may indicate that the vehicle is in the stuck state in the parking process. When receiving the instruction 4, the autonomous driving controller may send an instruction 5 to a hydraulic brake controller, where the instruction 5 may instruct the hydraulic brake controller to perform hydraulic braking control. When receiving the instruction 5, the hydraulic brake controller may establish master cylinder and wheel-end pressures, to implement deceleration or stop of the vehicle.

Optionally, the first motor rotation speed corresponds to a first speed of the vehicle. The method 200 further includes: The autonomous driving controller obtains a second speed of the vehicle. When a difference between the first speed and the second speed is greater than or equal to a preset speed difference, the autonomous driving controller sends an instruction to the brake controller, where the instruction instructs the brake controller to perform braking control.

For example, that the autonomous driving controller obtains the second speed of the vehicle includes: The autonomous driving controller determines the second speed based on data collected by a speed sensor.

For example, the brake controller may be an ESC.

For example, the autonomous driving controller may determine an expected speed v₁ at the moment t₁ based on the expected motor rotation speed n₁ at the moment t₁. At the moment t₁, the autonomous driving controller may determine an actual speed v₂ of the vehicle based on data collected by the speed sensor of the vehicle. When a difference between the expected speed v₁ and the actual speed v₂ is greater than or equal to the preset speed difference, the autonomous driving controller may send an instruction 6 to the ESC, where the instruction 6 instructs the ESC to perform hydraulic braking control. When receiving the instruction 6, the ESC may establish the master cylinder and wheel-end pressures, to implement deceleration or stop of the vehicle.

For example, the preset speed difference is 2 kilometers per hour.

The foregoing process of S210 to S270 may be understood as the speed mode. For example, when the speed of the vehicle is less than or equal to the preset speed, the autonomous driving controller may control the vehicle to enter the speed mode; or when the vehicle is in an automatic parking state, the autonomous driving controller may control the vehicle to enter the speed mode. The following describes the torque mode provided in embodiments of this application by using a method 600.

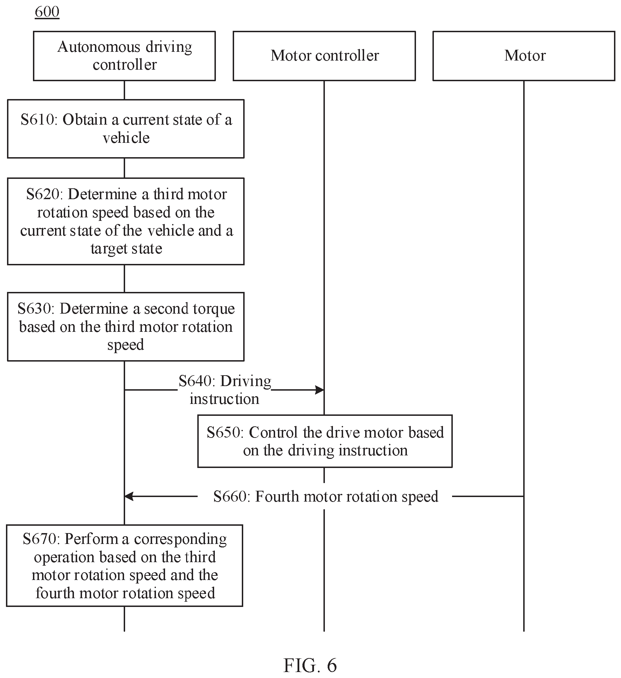

FIG. 6 is a schematic flowchart of a longitudinal control method 600 according to an embodiment of this application. The method 600 may be performed by a system including an autonomous driving controller and a motor controller. The method 600 includes the following steps.

S610: The autonomous driving controller obtains a current state of a vehicle.

S620: The autonomous driving controller determines a third motor rotation speed based on the current state of the vehicle and a target state.

For S610 and S620, refer to descriptions of S210 and S220. Details are not described herein again.

S630: The autonomous driving controller determines a second torque based on the third motor rotation speed.

S640: The autonomous driving controller sends a driving instruction to the motor controller, where the driving instruction includes the second torque.

Optionally, that the autonomous driving controller sends the driving instruction to the motor controller includes: The autonomous driving controller sends the driving instruction to the motor controller via a vehicle domain controller.

S650: The motor controller controls a drive motor based on the driving instruction.

S610 to S650 may be understood as a process in which the vehicle performs driving control in a torque mode. When the vehicle performs braking control in the torque mode, the autonomous driving controller may send a braking instruction to a brake controller, where the braking instruction includes information about a torque. When receiving the braking instruction, the brake controller may control the vehicle to decelerate or stop.

For example, the brake controller may be a hydraulic brake controller. When receiving the braking instruction, the hydraulic brake controller may establish master cylinder and wheel-end pressures, to implement deceleration or stop of the vehicle.

S660: The autonomous driving controller receives a fourth motor rotation speed sent by the motor.

S670: The autonomous driving controller performs a corresponding operation based on the third motor rotation speed and the fourth motor rotation speed.

The third motor rotation speed may be understood as an expected rotation speed of the drive motor, and the fourth motor rotation speed may be understood as an actual rotation speed of the drive motor.

In an embodiment, when a difference between the third motor rotation speed and the fourth motor rotation speed is greater than or equal to a preset rotation speed difference, the autonomous driving controller may send an instruction to the brake controller, where the instruction instructs the brake controller to perform braking control.

Optionally, the third motor rotation speed corresponds to a third speed of the vehicle. The method further includes: The autonomous driving controller obtains a fourth speed of the vehicle. When a difference between the third speed and the fourth speed is greater than or equal to a preset speed difference, the autonomous driving controller sends an instruction to the brake controller, where the instruction instructs the brake controller to perform braking control.

The third speed may be understood as an expected speed of the vehicle, and the fourth speed may be understood as an actual speed of the vehicle.

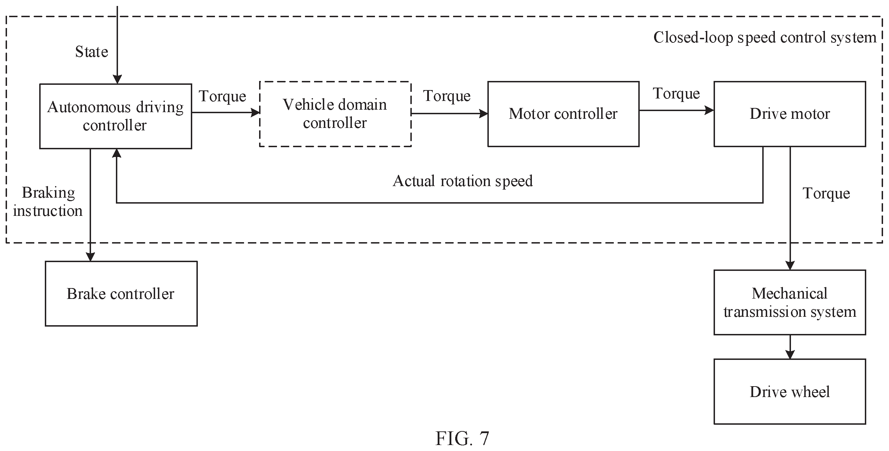

For example, FIG. 7 is another block diagram of a longitudinal control system according to an embodiment of this application. As shown in FIG. 7, the longitudinal control system includes the autonomous driving controller, the motor controller, and the motor. In the torque mode, the autonomous driving controller, the motor controller, and the motor form a closed-loop speed control system. When the autonomous driving controller controls vehicle driving, the autonomous driving controller may determine a motor rotation speed based on current location information of the vehicle and target location information, and determine a torque based on the motor rotation speed. The autonomous driving controller may send, to the motor controller, a driving instruction including information about the torque, to drive the vehicle by utilizing the drive motor. When the autonomous driving controller controls vehicle braking, the autonomous driving controller may send a braking instruction to the brake controller.

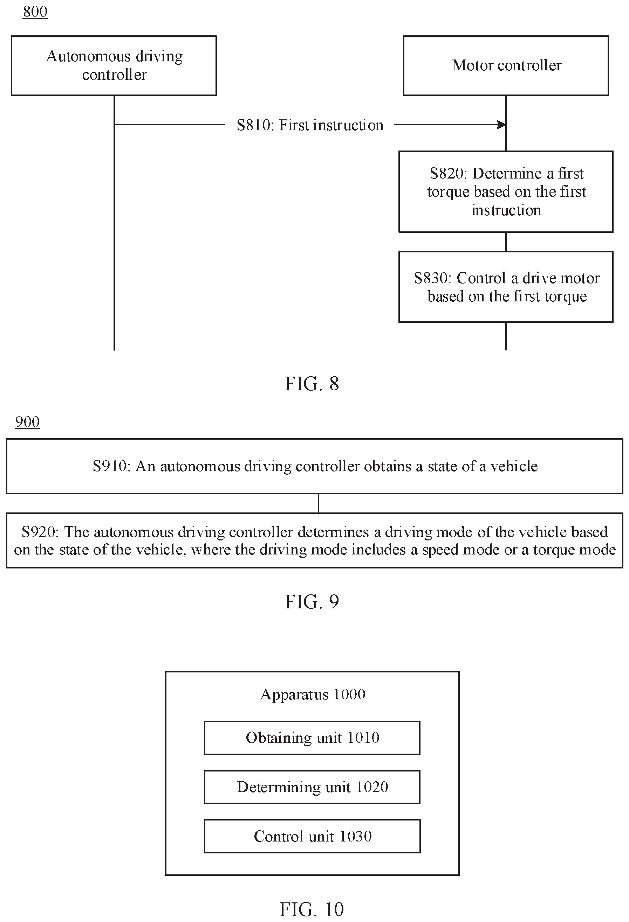

FIG. 8 is a schematic flowchart of a longitudinal control method 800 according to an embodiment of this application. The method 800 may be performed by the autonomous driving controller and the motor controller. The method 800 includes the following steps.

S810: The autonomous driving controller sends a first instruction to the motor controller, where the first instruction is used to determine a first motor rotation speed.

Optionally, the first instruction may include the first motor rotation speed.

Optionally, the first instruction may include a first distance or a first phase, the first distance is a distance between a vehicle and a target location, and the first phase is a quantity of revolutions that is of a drive motor and that corresponds to the first distance.

The first instruction may be a driving instruction or a braking instruction.

The first motor rotation speed may be understood as an expected rotation speed of the drive motor.

S820: The motor controller determines a first torque based on the first instruction.

Optionally, when the first instruction includes information about the first motor rotation speed, the motor controller may determine the first torque based on the first motor rotation speed.

Optionally, when the first instruction includes the first distance or the first phase, that the motor controller determines the first torque based on the first instruction includes: The motor controller determines the first motor rotation speed based on the first distance or the first phase; and the motor controller determines the first torque based on the first motor rotation speed.

S830: The motor controller controls the drive motor based on the first torque.

The foregoing method 800 may be understood as a working process of the vehicle in a speed mode. In the speed mode, the vehicle may implement driving and braking by utilizing the drive motor, without a need to depend on a conventional braking manner (for example, hydraulic braking). In this way, coupling with a chassis tier 1 (Tier 1) automobile supplier is reduced, and dependency of the autonomous driving controller on a chassis tier 1 is reduced, to improve closed-loop resolution efficiency of a longitudinal problem of the vehicle.

As shown in FIG. 4, a closed-loop execution link is formed between the motor controller and the drive motor. Compared with a closed-loop execution link between the autonomous driving controller and the drive motor shown in FIG. 7, the link is shorter, and this helps improve a control frequency of a vehicle speed (for example, a control frequency of a parking vehicle speed is improved from 100 Hz to 500 Hz) and control precision of the vehicle speed, to help improve user experience.

Optionally, the method 800 further includes: The motor controller obtains a second motor rotation speed of the drive motor. When a difference between the first motor rotation speed and the second motor rotation speed is greater than or equal to a preset rotation speed difference, the motor controller sends a second instruction to the autonomous driving controller, where the second instruction indicates that the rotation speed of the drive motor is abnormal. The autonomous driving controller sends a third instruction to a brake controller based on the second instruction, where the third instruction instructs the brake controller to perform braking.

The second motor rotation speed may be understood as an actual rotation speed of the drive motor.

As shown in FIG. 4, after obtaining the actual rotation speed of the drive motor, the motor controller may compare the actual rotation speed with the expected rotation speed. When the motor controller determines that the actual rotation speed and the expected rotation speed differ greatly, the motor controller may determine that the drive motor is abnormal. The motor controller may send, to the autonomous driving controller, the instruction indicating that the motor rotation speed is abnormal. When receiving the instruction, the autonomous driving controller may control the vehicle to switch from the speed mode to a torque mode. For example, in the torque mode, the autonomous driving controller may send the braking instruction to a hydraulic brake controller. When receiving the braking instruction, the hydraulic brake controller may establish master cylinder and wheel-end pressures, to implement deceleration or stop of the vehicle.

Optionally, the first motor rotation speed corresponds to a first vehicle speed. The method 800 further includes: The autonomous driving domain controller obtains a second vehicle speed of the vehicle. When a difference between the first vehicle speed and the second vehicle speed is greater than or equal to a preset vehicle speed difference, the autonomous driving domain controller sends a fourth instruction to the brake controller, where the fourth instruction instructs the brake controller to perform braking.

The first vehicle speed may be understood as an expected vehicle speed of the vehicle, and the second vehicle speed may be understood as an actual vehicle speed of the vehicle. The first vehicle speed may correspond to the first motor rotation speed.

The autonomous driving controller may obtain data collected by a vehicle speed sensor, and determine the actual vehicle speed of the vehicle based on the data. When determining that a difference between the expected vehicle speed and the actual vehicle speed of the vehicle is excessively large, the autonomous driving controller may control the vehicle to switch from the speed mode to a torque mode. For example, in the torque mode, the autonomous driving controller may send the braking instruction to a hydraulic brake controller. When receiving the braking instruction, the hydraulic brake controller may establish master cylinder and wheel-end pressures, to implement deceleration or stop of the vehicle.

Optionally, the autonomous driving controller is connected to the motor controller.

As shown in FIG. 4, the autonomous driving controller and the motor controller may be directly connected in a wired or wireless manner.

Optionally, that the autonomous driving controller sends the first instruction to the motor controller includes: The autonomous driving controller sends the first instruction to the motor controller via a vehicle domain controller.

As shown in FIG. 5, the autonomous driving controller and the motor controller may be connected through the vehicle domain controller. The autonomous driving controller and the vehicle domain controller may be connected in a wired or wireless manner, and the vehicle domain controller and the motor controller may be connected in a wired or wireless manner.

Optionally, the method 800 further includes: Before sending the first instruction to the motor controller, the autonomous driving controller determines that the vehicle is in an automatic parking state, or determines that a speed of the vehicle is less than or equal to a preset speed.

The technical solutions in embodiments of this application may be applied to a scenario in which the vehicle is in low-speed driving or a scenario in which the vehicle is in the automatic parking state. For example, when the vehicle is in the automatic parking state, the vehicle may be controlled in the speed mode. Longitudinal control precision is improved, to improve a sticking and overshoot of the vehicle, so as to help improve parking experience of a user. For example, a stuck time is reduced by 50%, a success rate of auxiliary parking in a narrow parking space is improved, a number of gear changes is reduced by 30%, and parking duration is reduced by 10%.

FIG. 9 is a schematic flowchart of a longitudinal control method 900 according to an embodiment of this application. The method 900 may be performed by the autonomous driving controller. The method 900 includes the following steps.

S910: The autonomous driving controller obtains a current state of a vehicle.

For example, the state of the vehicle includes whether a speed of the vehicle is greater than or equal to a preset speed, for example, the preset speed may be 10 kilometers per hour.

For example, the state of the vehicle includes whether the vehicle is in an automatic parking state, for example, whether the vehicle detects that a user activates an AVP function.

S920: The autonomous driving controller determines a driving mode of the vehicle based on the state of the vehicle, where the driving mode includes a speed mode or a torque mode.

For example, when the speed of the vehicle is less than or equal to the preset speed, the autonomous driving controller may control the vehicle to enter the speed mode. As shown in FIG. 4, in the speed mode, the autonomous driving controller may send, to a motor controller, a control instruction including information used to determine a rotation speed of a motor, to control driving or braking of the vehicle.

When the speed of the vehicle is greater than the preset speed, the vehicle may be controlled to enter the torque mode. As shown in FIG. 7, in the torque mode, the autonomous driving controller may send, to a motor controller, a driving instruction including information about a torque, to control the vehicle to perform driving; or the autonomous driving controller may send, to a brake controller, a braking instruction including information about a torque, to control the vehicle to perform braking.

For example, when the vehicle is in the automatic parking state, the autonomous driving controller may control the vehicle to enter the speed mode. When the vehicle is in a non-parking state, the autonomous driving controller may control the vehicle to enter the torque mode.

FIG. 10 is a block diagram of a longitudinal control apparatus 1000 according to an embodiment of this application. The apparatus 1000 includes: an obtaining unit 1010, configured to obtain a first instruction from an autonomous driving controller, where the first instruction is used to determine a first motor rotation speed; a determining unit 1020, configured to determine a first torque based on the first instruction; and a control unit 1030, configured to control a drive motor based on the first torque.

Optionally, the apparatus 1000 further includes a sending unit. The obtaining unit 1010 is further configured to obtain a second motor rotation speed of the drive motor. The sending unit is further configured to: when a difference between the first motor rotation speed and the second motor rotation speed is greater than or equal to a preset rotation speed difference, send a second instruction to the autonomous driving controller, where the second instruction indicates that the rotation speed of the drive motor is abnormal.

Optionally, the obtaining unit 1010 is configured to: obtain the first instruction sent by the autonomous driving controller; or obtain the first instruction sent by the autonomous driving controller via a vehicle domain controller.

Optionally, the first instruction includes a first distance or a first phase, the first distance is a distance between a vehicle and a target location, the first phase is a quantity of revolutions that is of the drive motor and that corresponds to the first distance, and the control unit 1030 is configured to: determine the first motor rotation speed based on the first distance or the first phase; and determine the first torque based on the first motor rotation speed.

Optionally, the first instruction includes the first motor rotation speed.

For example, the obtaining unit 1010 may be the computing platform in FIG. 1, or a processing circuit, a processor, or a controller in the computing platform. For example, the obtaining unit 1010 is the processor 121 in the computing platform. The processor 121 may obtain the first instruction sent by the autonomous driving controller.

For another example, the determining unit 1020 may be the computing platform in FIG. 1, or a processing circuit, a processor, or a controller in the computing platform. For example, the determining unit 1020 is a processor 122 in the computing platform. The processor 122 may determine the first torque based on the first instruction obtained by the processor 121.

For another example, the control unit 1030 may be the computing platform in FIG. 1, or a processing circuit, a processor, or a controller in the computing platform. For example, the control unit 1030 may be a processor 123 in the computing platform in FIG. 1. The processor 123 may control the drive motor based on the first torque.

A function implemented by the obtaining unit 1010, a function implemented by the determining unit 1020, and a function implemented by the control unit 1030 may be implemented by different processors, or may be implemented by a same processor, or some functions may be implemented by a same processor. This is not limited in embodiments of this application.

An embodiment of this application further provides a motor controller. The motor controller may include the apparatus 1000. For example, the motor controller may be a motor MCU.

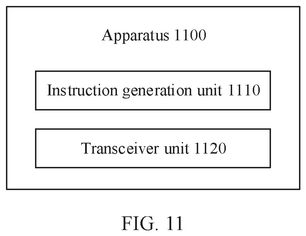

FIG. 11 is a block diagram of a longitudinal control apparatus 1100 according to an embodiment of this application. The apparatus 1100 includes: an instruction generation unit 1110, configured to generate a first instruction, where the first instruction is used to determine a first motor rotation speed; and a transceiver unit 1120, configured to send the first instruction to a motor controller.

Optionally, the transceiver unit 1120 is further configured to: receive a second instruction sent by the motor controller, where the second instruction indicates that a rotation speed of a drive motor is abnormal; and send a third instruction to a brake controller based on the second instruction, where the third instruction instructs the brake controller to perform braking control.

Optionally, the first motor rotation speed corresponds to a first vehicle speed. The apparatus 1100 further includes an obtaining unit, configured to obtain a second vehicle speed of a vehicle. The transceiver unit 1120 is further configured to: when a difference between the first vehicle speed and the second vehicle speed is greater than or equal to a preset vehicle speed difference, send a fourth instruction to a brake controller, where the fourth instruction instructs the brake controller to perform braking control.

Optionally, the transceiver unit 1120 is configured to send the first instruction to the motor controller via a vehicle domain controller.

Optionally, the apparatus 1100 further includes a determining unit, configured to: before the transceiver unit sends the first instruction to the motor controller, determine that the vehicle is in an automatic parking state, or determine that a speed of the vehicle is less than or equal to a preset speed.

Optionally, the first instruction includes a first distance or a first phase, the first distance is a distance between the vehicle and a target location, and the first phase is a quantity of revolutions that is of the drive motor and that corresponds to the first distance.

For example, the instruction generation unit 1110 may be the computing platform in FIG. 1, or a processing circuit, a processor, or a controller in the computing platform. For example, the instruction generation unit 1110 is a processor 124 in the computing platform. The processor 124 may obtain current location information of the vehicle and target location information, to generate the first instruction based on the current location information of the vehicle and target location information.

For another example, the transceiver unit 1120 may be a communication interface between the processor 124 and the processor 121 in FIG. 1. After generating the first instruction, the processor 124 may send the first instruction to the motor controller through the communication interface.

An embodiment of this application further provides an autonomous driving controller. The autonomous driving controller includes the apparatus 1100.

It should be understood that division of the units in the foregoing apparatus is merely logical function division. In practice, all or some of the units may be integrated into one physical entity, or may be physically separated. In addition, the units in the apparatus may be implemented in a form of software invoked by the processor. For example, the apparatus includes a processor, the processor is connected to a memory, the memory stores instructions, and the processor invokes the instructions stored in the memory, to implement any one of the foregoing methods or implement the functions of the units of the apparatus. The processor is, for example, a general purpose processor, like a CPU or a microprocessor. The memory is a memory inside the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between components in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement the functions of some or all of the units. All the units of the apparatus may be implemented in a form of software called by the processor, or may be implemented in a form of hardware circuit, or some of the units are implemented in a form of software called by the processor, and remaining units are implemented in a form of hardware circuit.

The units in the apparatus may be configured as one or more processors (or processing circuits) that implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated and implemented in a form of SoC. The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the method or the steps performed in the foregoing embodiments.

Optionally, if the apparatus is located in the vehicle, the processing unit may be the processors 121 to 12n shown in FIG. 1.

An embodiment of this application further provides a longitudinal control system. The longitudinal control system includes the foregoing autonomous driving controller and the foregoing motor controller, or the longitudinal control system may include the foregoing apparatus 1000 and the foregoing apparatus 1100.

An embodiment of this application further provides a vehicle. The vehicle may include the apparatus 1000 or the apparatus 1100, or include the longitudinal control system.

An embodiment of this application further provides a computer program product. The computer program product includes computer program code. When the computer program code is run on a computer, the computer is enabled to perform the foregoing longitudinal control method.

An embodiment of this application further provides a computer-readable medium. The computer-readable medium stores program code. When the computer program code is run on a computer, the computer is enabled to perform the foregoing longitudinal control method.

In an implementation process, the steps in the foregoing methods may be implemented by using an integrated logical circuit of hardware in the processor, or by using instructions in a form of software. The method disclosed with reference to embodiments of this application may be directly performed by a hardware processor, or may be performed by a combination of a software module and hardware in the processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, with reference to examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected as required to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A longitudinal control system, wherein the longitudinal control system comprises an autonomous driving controller and a motor controller, wherein
the autonomous driving controller is configured to send a first instruction to the motor controller, wherein the first instruction is used to determine a first motor rotation speed;
the motor controller is configured to determine a first torque based on the first instruction; and
the motor controller is further configured to control a drive motor based on the first torque.

2. The system according to claim 1, wherein the motor controller is further configured to: obtain a second motor rotation speed of the drive motor; and
when a difference between the first motor rotation speed and the second motor rotation speed is greater than or equal to a preset rotation speed difference, send a second instruction to the autonomous driving controller, wherein the second instruction indicates that the rotation speed of the drive motor is abnormal; and
the autonomous driving controller is further configured to:
send a third instruction to a brake controller based on the second instruction, wherein the third instruction instructs the brake controller to perform braking control.

3. The system according to claim 1, wherein the first motor rotation speed corresponds to a first vehicle speed, and the autonomous driving domain controller is further configured to:
obtain a second vehicle speed of a vehicle; and
when a difference between the first vehicle speed and the second vehicle speed is greater than or equal to a preset vehicle speed difference, send a fourth instruction to a brake controller, wherein the fourth instruction instructs the brake controller to perform braking control.

4. The system according to any one of claims 1 to 3, wherein the autonomous driving controller is connected to the motor controller.

5. The system according to any one of claims 1 to 3, wherein the longitudinal control system further comprises a vehicle domain controller;
the autonomous driving controller is configured to send the first instruction to the vehicle domain controller; and
the vehicle domain controller is configured to send the first instruction to the motor controller.

6. The system according to any one of claims 1 to 5, wherein the autonomous driving controller is further configured to:
before sending the first instruction to the motor controller, determine that the vehicle is in an automatic parking state, or determine that a speed of the vehicle is less than or equal to a preset speed.

7. The system according to any one of claims 1 to 6, wherein the first instruction comprises a first distance or a first phase, the first distance is a distance between the vehicle and a target location, the first phase is a quantity of revolutions that is of the drive motor and that corresponds to the first distance, and the motor controller is configured to:
determine the first motor rotation speed based on the first distance or the first phase; and
determine the first torque based on the first motor rotation speed.

8. A longitudinal control method, wherein the method is applied to a motor controller, and the method comprises:
obtaining a first instruction from an autonomous driving controller, wherein the first instruction is used to determine a first motor rotation speed;
determining a first torque based on the first instruction; and
controlling a drive motor based on the first torque.

9. The method according to claim 8, wherein the method further comprises:
obtaining a second motor rotation speed of the drive motor; and
when a difference between the first motor rotation speed and the second motor rotation speed is greater than or equal to a preset rotation speed difference, sending a second instruction to the autonomous driving controller, wherein the second instruction indicates that the rotation speed of the drive motor is abnormal.

10. The method according to claim 8 or 9, wherein obtaining the first instruction from the autonomous driving controller comprises:
obtaining the first instruction sent by the autonomous driving controller; or
obtaining the first instruction sent by the autonomous driving controller via a vehicle domain controller.

11. The method according to any one of claims 8 to 10, wherein the first instruction comprises a first distance or a first phase, the first distance is a distance between a vehicle and a target location, and the first phase is a quantity of revolutions that is of the drive motor and that corresponds to the first distance; and
determining the first torque based on the first instruction comprises:
determining the first motor rotation speed based on the first distance or the first phase; and
determining the first torque based on the first motor rotation speed.

12. The method according to any one of claims 8 to 10, wherein the first instruction comprises the first motor rotation speed.

13. A longitudinal control method, wherein the method is applied to an autonomous driving controller, and the method comprises:
generating a first instruction, wherein the first instruction is used to determine a first motor rotation speed; and
sending the first instruction to a motor controller.

14. The method according to claim 13, wherein the method further comprises:
receiving a second instruction sent by the motor controller, wherein the second instruction indicates that a rotation speed of the drive motor is abnormal; and
sending a third instruction to a brake controller based on the second instruction, wherein the third instruction instructs the brake controller to perform braking control.

15. The method according to claim 13, wherein the first motor rotation speed corresponds to a first vehicle speed, and the method further comprises:
obtaining a second vehicle speed of a vehicle; and
when a difference between the first vehicle speed and the second vehicle speed is greater than or equal to a preset vehicle speed difference, sending a fourth instruction to a brake controller, wherein the fourth instruction instructs the brake controller to perform braking control.

16. The method according to any one of claims 13 to 15, wherein sending the first instruction to the motor controller comprises:
sending the first instruction to the motor controller via a vehicle domain controller.

17. The method according to any one of claims 13 to 16, wherein the method further comprises:
before sending the first instruction to the motor controller, determining that the vehicle is in an automatic parking state, or determining that a speed of the vehicle is less than or equal to a preset speed.

18. The method according to any one of claims 13 to 17, wherein the first instruction comprises a first distance or a first phase, the first distance is a distance between the vehicle and a target location, and the first phase is a quantity of revolutions that is of the drive motor and that corresponds to the first distance.

19. A longitudinal control apparatus, comprising:
an obtaining unit, configured to obtain a first instruction from an autonomous driving controller, wherein the first instruction is used to determine a first motor rotation speed;
a determining unit, configured to determine a first torque based on the first instruction; and
a control unit, configured to control a drive motor based on the first torque.

20. The apparatus according to claim 19, wherein the apparatus further comprises a sending unit, wherein
the obtaining unit is further configured to obtain a second motor rotation speed of the drive motor; and
the sending unit is further configured to: when a difference between the first motor rotation speed and the second motor rotation speed is greater than or equal to a preset rotation speed difference, send a second instruction to the autonomous driving controller, wherein the second instruction indicates that the rotation speed of the drive motor is abnormal.

21. The apparatus according to claim 19 or 20, wherein the obtaining unit is configured to:
obtain the first instruction sent by the autonomous driving controller; or
obtain the first instruction sent by the autonomous driving controller via a vehicle domain controller.

22. The apparatus according to any one of claims 19 to 21, wherein the first instruction comprises a first distance or a first phase, the first distance is a distance between a vehicle and a target location, and the first phase is a quantity of revolutions that is of the drive motor and that corresponds to the first distance; and
the control unit is configured to:
determine the first motor rotation speed based on the first distance or the first phase; and
determine the first torque based on the first motor rotation speed.

23. The apparatus according to any one of claims 19 to 21, wherein the first instruction comprises the first motor rotation speed.

24. A longitudinal control apparatus, comprising:
an instruction generation unit, configured to generate a first instruction, wherein the first instruction is used to determine a first motor rotation speed; and
a transceiver unit, configured to send the first instruction to a motor controller.

25. The apparatus according to claim 24, wherein the transceiver unit is further configured to:
receive a second instruction sent by the motor controller, wherein the second instruction indicates that a rotation speed of the drive motor is abnormal; and
send a third instruction to a brake controller based on the second instruction, wherein the third instruction instructs the brake controller to perform braking control.

26. The apparatus according to claim 24, wherein the first motor rotation speed corresponds to a first vehicle speed, and the apparatus further comprises:
an obtaining unit, configured to obtain a second vehicle speed of a vehicle; and
the transceiver unit is further configured to: when a difference between the first vehicle speed and the second vehicle speed is greater than or equal to a preset vehicle speed difference, send a fourth instruction to a brake controller, wherein the fourth instruction instructs the brake controller to perform braking control.

27. The apparatus according to any one of claims 24 to 26, wherein the transceiver unit is configured to:
send the first instruction to the motor controller via a vehicle domain controller.

28. The apparatus according to any one of claims 24 to 27, wherein the apparatus further comprises:
a determining unit, configured to: before the transceiver unit sends the first instruction to the motor controller, determine that the vehicle is in an automatic parking state, or determine that a speed of the vehicle is less than or equal to a preset speed.

29. The apparatus according to any one of claims 24 to 28, wherein the first instruction comprises a first distance or a first phase, the first distance is a distance between the vehicle and a target location, and the first phase is a quantity of revolutions that is of the drive motor and that corresponds to the first distance.

30. A longitudinal control apparatus, comprising:
a memory, configured to store a computer program; and
a processor, configured to execute the computer program stored in the memory, so that the apparatus performs the method according to any one of claims 8 to 18.

31. A vehicle, comprising the longitudinal control system according to any one of claims 1 to 7, or comprising the longitudinal control apparatus according to any one of claims 19 to 30.

32. A computer-readable storage medium, wherein the computer-readable storage medium stores a computer program, and when the computer program is executed by a computer, the method according to any one of claims 8 to 18 is implemented.

33. A chip, comprising a circuit, wherein the circuit is configured to perform the method according to any one of claims 8 to 18.
